# EUROPÄISCHE PATENTSCHRIFT

(11) **EP 0 513 481 B1**
(45) Veröffentlichungstag und Bekanntmachung des Hinweises auf die Patenterteilung: **05.04.1995**
(21) Anmeldenummer: 92102784.3
(22) Anmeldetag: 20.02.1992
(51) Int. Cl.: G01G 23/06, G01L 1/10, G01P 15/10, G01G 3/16

(54) **Messzelle**
Measuring cell
Cellule de mesure

(30) Priorität: 17.05.1991 CH 1489/91
(43) Veröffentlichungstag der Anmeldung: 19.11.1992
(73) Patentinhaber: Mettler-Toledo AG, 8606 Greifensee (CH)
(72) Erfinder: Meier, Eugen, CH-8706 Meilen (CH)

(56) Entgegenhaltungen:
- CH-A- 492 961
- US-A- 4 158 395
- US-A- 4 298 081
- US-A- 4 656 383

## Beschreibung

Die Erfindung bezieht sich auf eine Messzelle fuer ein Kraftmessgeraet nach dem Oberbegriff des Anspruchs 1.

### STAND DER TECHNIK

Eine bekannte Messzelle {DE 37 04 584} weist beispielsweise einen Kraftsensor, insbesondere zur Beschleunigungsmessung, auf, der ein Schwingglied enthaelt, welches in einer seine Laengsachse enthaltenden Ebene unter Aufrechterhaltung einer charakteristischen Frequenz schwingt und zur Entkopplung bzw. Isolierung von seinen beiden aeusseren Haltern an seinen beiden Enden mit je einem Paar von Isolatormassen am einen bzw. anderen Ende eines quer zur Laengsachse verlaufenden Supports versehen ist, sowie ueber duenne Isolatorfedern mit den Haltern verbunden ist, die sich zwischen letzteren und den beiden Supporten erstrecken und Axialkraefte enlang ihrer Laengsachsen von den Haltern zum Schwingglied uebertragen. Daruberhinaus kann zwischen jedem Halter {12, 14} und dem benachbarten Support [Ansschlussstelle] {18, 20} nur eine Isolatorfeder {22, 26} vorgesehen sein. Dabei ist das Schwingglied als Schwingbalken {16} ausgebildet und die Isolatormassen {30, 32, 34, 36} erstrecken sich im wesentlichen parallel zur Laengsachse des Schwingbalkens {16} entlang desselben, so dass der Schwerpunkt jedes Isolatormassenpaares {30 ... 36} in der Schwingungsebene des Schwingbalkens {16} liegt und der Schwerpunkt jedes Isolatormassenpaares {30 ... 36} einen vorgegebenen Abstand vom Support [Anschlussstelle] {18, 20} des Isolatormassenpaares {20 ... 36} hat.

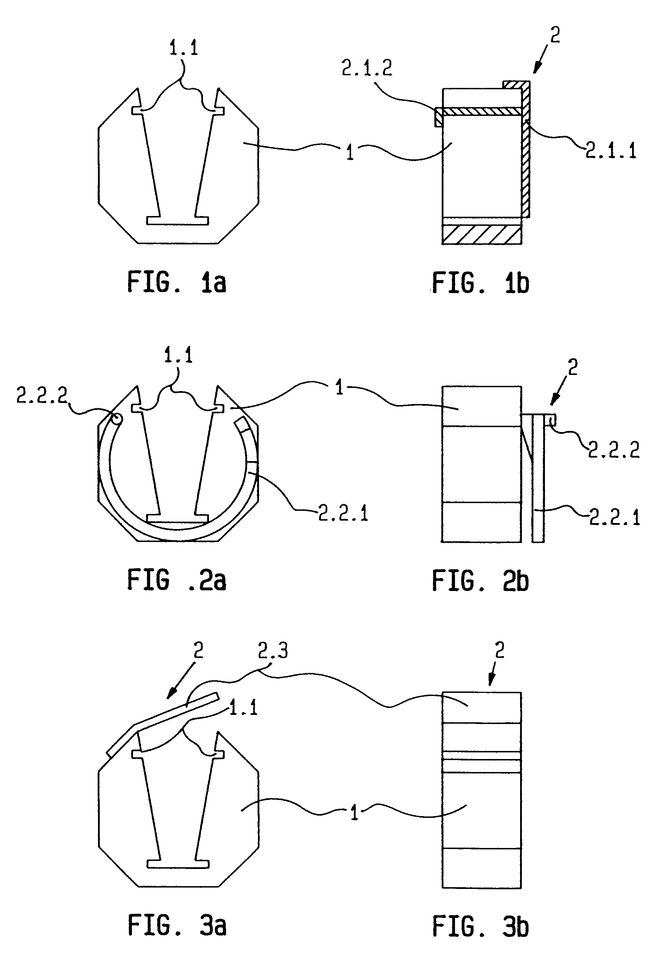

Die CH-A-492 961 beschreibt einen Massen- oder Kraftmesser mit 2 Saiten als Messgliedern. Die beiden Saiten sind jeweils über Kraftverteiler verbunden, welche die Form eines Hebels (Fig. 2) oder eines mittels Drähten geführten Koppelkörpers (Fig. 1) aufweisen. Weder Knotenmassen auf den Saiten noch die Art der Saiteneinspannung werden offenbart.

### NACHTEIL DES STANDES DER TECHNIK

Eine solche Anordnung hat jedoch den Nachteil, dass bei direkten Schlaegen, insbesondere auf den Grundkoerper, beispielsweise einer Waage, dessen Eigenschwingungen angeregt werden. Ohne spezielle frequenzmaessige Entkopplung schwingen auch die Isolatormassen der Saite in ihren vielen moeglichen, durch den Kraftimpuls angeregten Eigenfrequenzen. Wegen der hohen Schwinggueten der Saitensysteme werden diese Schwingungen auch sehr wenig gedaempft und klingen also noch lange nach dem Schlag nur ganz langsam ab. Durch diese Schwingungen wird jedoch die messtechnisch genutzte Saitenfrequenz stets stoerend moduliert. Dies bedingt, wegen der genannten hohen Schwingguete und der damit verbundnen geringen Daempfung einen zeitlich nur langsam abklingenden Stoerpegel fuer die Messung. Im weiteren koennen die ausgeloesten Eigenschwingungen, ebenfalls aufgrund dieser hohen Schwinggueten relativ grosse Amplituden erreichen und zu kritischen ueberlagerten Biegespannungen im Schwingglied und den Isolatorfedern fuehren. Die mechanische Robustheit des Sensors und dessen messtechnische Qualitaet werden vermindert. Enthaelt der durch den Impuls angeregte Grundkoerper ebenfalls gleiche Eigenfrequenzen wie die Isolatormassen, so ergeben sich durch Verstaerkungswirkung besonders unguenstige Verhaeltnisse.

### ZIEL DER ERFINDUNG

Ziel der Erfindung ist daher die Beseitigung oder wenigstens weitgehende Reduzierung dieses Stoerpegels ohne Beeinflussung der messtechnischen Qualitaet der Saite, sowie eine weitgehende Unterdrueckung [Daempfung] aller wesentlichen Resonanzen der Isolatormassen, die den Sensor durch ueberlagerte Biegespannungen zusaetzlich beanspruchen.

### ERFINDUNG

Dieses Ziel laesst sich durch die Merkmale des Anspruchs 1 erreichen. Ausserdem koennen die Merkmale der Ansprueche 2 bis 13 verwirklicht werden.

Weitere Einzelheiten und Merkmale der erfindungsgemaessen Messzelle mit einem Daempferelement ergeben sich aus der Beschreibung von Ausfuehrungsbeispielen anhand der Zeichnung. In dieser zeigt
- Fig. 1a: eine Isolatormasse in Draufsicht [Richtung der Saitenachse, jedoch ohne Saite],
- Fig. 1b: eine 1. Variante eines Daempferelementes auf einer Isolatormasse aufgesetzt, im Schnitt,
- Fig. 2a,b: eine 2. Variante eines Daempferelementes auf einer Isolatormasse,
- Fig. 3a,b: eine 3. Variante eines Daempferelementes auf einer Isolatormasse,
- Fig. 4a,b: eine 4. Variante eines Daempferelementes auf einer Isolatormasse,
- Fig. 5a: eine 5. Variante eines Daempferelementes auf einer Isolatormasse,
- Fig. 5b: das Daempferelement zu Fig. 5a in Draufsicht,
- Fig. 6a,b: eine 6. Variante eines Daempferelementes auf einer Isolatormasse,
- Fig. 7: eine 7. Variante eines Daempferelementes auf einer Isolatormasse,
- Fig. 8: eine 8. Variante eines Daempferelementes auf einer Isolatormasse,
- Fig. 9a,b: eine 9. Variante eines Daempferelementes auf einer Isolatormasse,
- Fig. 10: eine 10. Variante eines Daempferelementes auf einer Einspanneinrichtung,
- Fig. 11: eine 11. Variante eines Daempferelementes auf einer Einspanneinrichtung.

Eine Messzelle fuer ein Kraftmessgeraet, insbesondere fuer eine Waage, weist einen Kraftmesswandler und ein in diesem angeordnetes, schwingfaehiges System auf, vorzugsweise eine Saite S, welche zur Isolation des der Messung dienenden Abschnittes der schwingenden Saite S von der Einspanneinrichtung E mit Knotenmassen 1, auch Isolatormassen genannt, versehen ist. Um die stoerende Modulation der messtechnisch genutzten Saitenfrequenz zufolge von beispielsweise durch einen Schlag auf das Gehaeuse des Messsystems angeregten Eigenschwingungen zu vermindern oder ganz zu vermeiden, wird wenigstens eine der Knotenmassen 1 mit einem Daempferelement 2 versehen. Es ist aber auch moeglich, das Daempferelement 2 auf oder in wenigstens einer der Einspanneinrichtungen E der Saite anzuordnen.

Insbesondere stehen zwei bevorzugte Ausfuehrungsformen [oder auch Kombinatinen davon] im Vordergrund: Solche, bei denen das Daempferelement als Prallelement, und solche, bei denen es als Koppelschwinger ausgefuehrt ist.

Bei Prallelementen, regelmaessig aus hartem Material ausgefuehrt, wird die stoerende Energie im wesentlichen durch Relativbewegung des Elementes in seiner Halterung [z.B. in der Knotenmasse] abgefuehrt. Bei Koppelschwingern kommt die Wirkung als Schwingungsabsorber zur Geltung; darueber hinaus kann durch entsprechende Wahl des Materials [beispielsweise weicher Kunststoff oder Gummi] eine zusaetzliche Wirkung erzielt werden [Energievernichtung durch innere Reibung].

In einer 1. Variante [Fig. 1a,b] eines Daempferelementes 2 ist dieses als eine Daempfer-Prallplatte 2.1.1 1. Art ausgebildet, welche mit einer abstehenden Daempferhalterung 2.1.2 in eine Innennut 1.1 der Knotenmasse 1 lose eingeschoben und gegen losruetteln gesichert ist. Es ist aber auch moeglich, die Daempfer-Prallplatte als einen Prall-Buegel auszubilden und geeignet an der Hauptmasse zu befestigen.

In einer 2. Variante [Fig. 2a,b] eines Daempferelementes 2 ist dieses als ein Koppelschwinger in der Form eines als an einem Ende leicht gekroepfter, nicht ganz geschlossener Daempferring 2.2.1 ausgebildet, welcher mit seinem gekroepften Ende mit der Knotenmasse 1 verbunden, beispielsweise verklebt, ist. An seinem anderen, schwingungsfaehigen Ende traegt er eine Ring-Daempfermasse 2.2.2.

In einer 3. Variante [Fig. 3a,b] eines Daempferelementes 2 ist dieses als ein Koppelschwinger in der Form einer, an einem Ende leicht abgewinkelter, Daempferplatte 2.3 1. Art in Form eines Biegestabes ausgebildet, die mit ihrem abgewinkelten Ende mit der Knotenmasse 1 unloesbar verbunden, beispielsweise verloetet, ist und mit ihrem freien Ende schwingen kann. Alternativ kann der Biegestab auch gerade ausgebildet sein. Seine Lage ist in beiden Faellen vorzugsweise quer zur Saite vorgesehen.

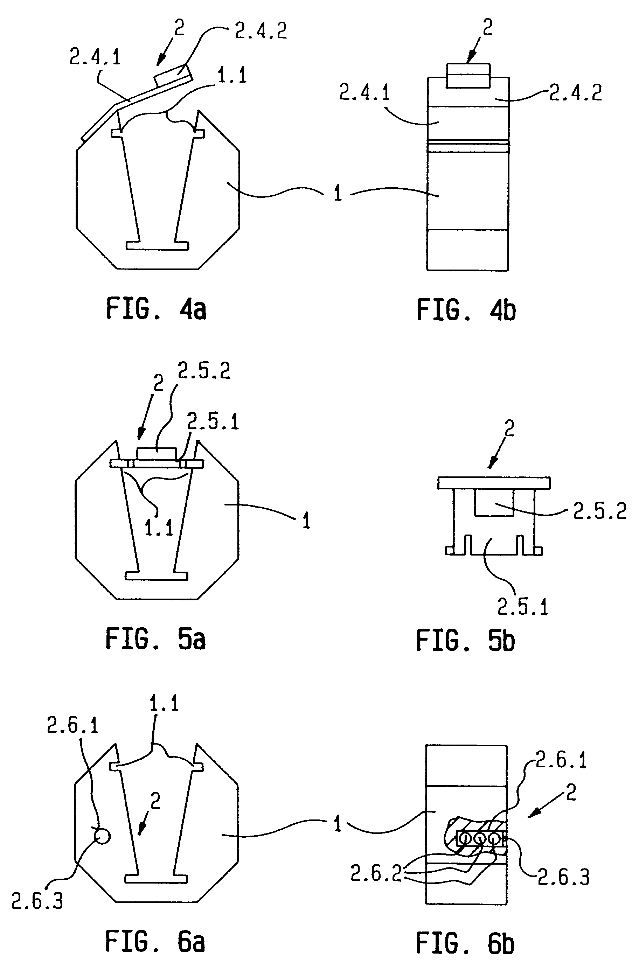

In einer 4. Variante [Fig. 4a,b] eines Daempferelementes 2 ist dieses als ein Koppelschwinger in der Form einer, an einem Ende leicht abgewinkelter, Daempferplatte 2.4.1 2. Art in Form eines Biegestabes ausgebildet, die mit ihrem abgewinkelten Ende mit der Knotenmasse 1 unloesbar verbunden, beispielsweise verloetet, ist und mit ihrem freien Ende schwingen kann, wobei sie an diesem freien Ende eine Platten-Daempfermasse 2.4.2 aufweist. Alternativ kann der Biegestab auch gerade ausgebildet sein. Seine Lage ist in beiden Faellen vorzugsweise quer zur Saite vorgesehen.

In einer 5. Variante [Fig. 5a,b] eines Daempferelementes 2 ist dieses als eine Daempfer-Prallplatte 2.5.1 2. Art ausgebildet, welche in eine Innennut 1.1 der Knotenmasse 1 lose, aber unverlierbar eingeschoben ist. Auf der Daempfer-Prallplatte 2.5.1 2. Art sitzt eine Prallplatten-Daempfermasse 2.5.2.

In einer 6. Variante [Fig. 6a,b] eines Daempferelementes 2 ist dieses als eine in der Knotenmasse 1 eingelassene Bohrung 2.6.1 ausgebildet, in welche fuer die Daempfung wenigstens zwei Prallkugeln 2.6.2 eingefuellt sind, wobei die Bohrung 2.6.1 mit einem Pfropfen 2.6.3 verschlossen ist.

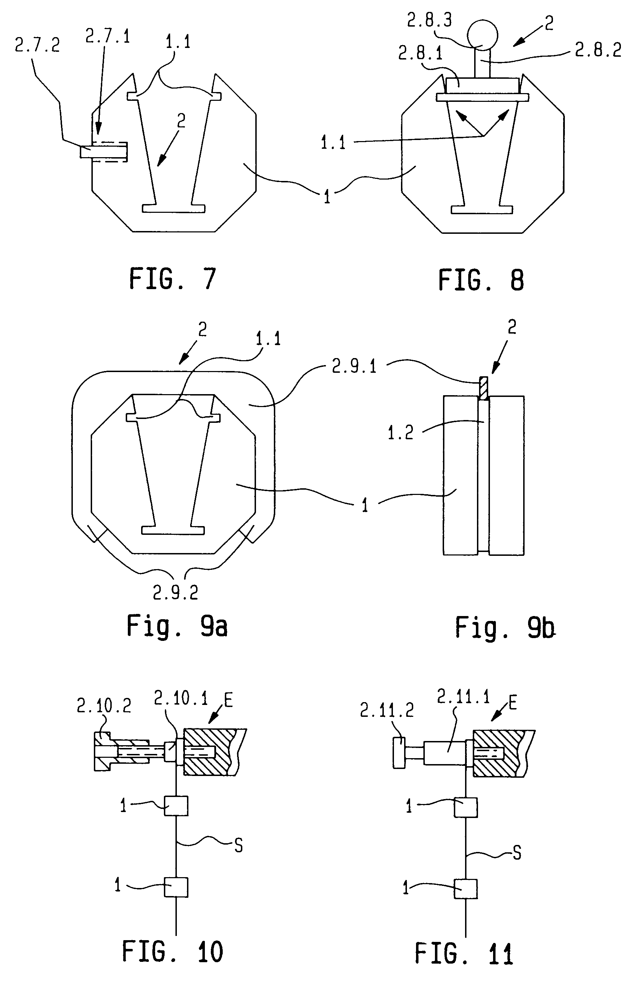

In einer 7. Variante [Fig. 7] eines Daempferelementes 2 ist dieses als eine in der Knotenmasse 1 eingelassene Gewindebohrung 2.7.1 ausgebildet, in welche fuer die Daempfung eine Daempferschraube 2.7.2 lose eingeschraubt, aber gegen losruetteln gesichert ist.

In einer 8. Variante [Fig. 8] eines Daempferelementes 2 ist dieses als ein Koppelschwinger in der Form einer Daempfer-Platte 2.8.1 3. Art ausgebildet, welche in einer Innennut 1.1 der Knotenmasse 1 fest sitzt. Mit ihr monolithisch ausgebildet ist ein Daempfungsschwingelement/Daempferarm 2.8.2 in Form eines Biegestabs, das von der Daempfer-Platte 2.8.1 3. Art seitlich oder nach oben absteht und schwingungsfaehig ist. Vorzugsweise weist dieses Daempfungsschwingelement 2.8.2 an seinem freien Ende eine Daempfermasse 2.8.3 auf. Dabei kann die Daempfer-Platte 2.8.1 3. Art zusaetzlich als ein in die Hauptmasse einrastender Schieber ausgebildet sein. Der Biegestab kann aber auch im wesentlichen gerade ausgebildet und in einer durch die Saite gehenden Ebene angeordnet sein.

In einer 9. Variante [Fig. 9a,b] eines Daempferelementes 2 ist dieses als eine u-foermige Daempfer-Prallplatte 2.9.1 ausgebildet, welche in einer Umfangsnut 1.2 der Knotenmasse 1 lose sitzt und diese mit ihren Schenkeln 2.9.2 umgreift und so gegen losruetteln gesichert ist.

In einer 10. Variante [Fig. 10] eines Daempferelementes 2 ist dieses auf eine mit der Einspanneinrichtung E verbundene Befestigungsschraube 2.10.1 fuer z.B. die Saite S als eine Daempfermutter 2.10.2 lose aufgeschraubt, aber gegen losruetteln gesichert.

In einer 11. Variante [Fig. 11] eines Daempferelementes 2 ist dieses auf ein mit der Einspanneinrichtung E verbundenes Befestigungsmittel 2.11.1 fuer z.B. die Saite S als eine Daempferschraube 2.11.2 auf- oder eingeschraubt.

Nach einer anderen Variante ist es moeglich, das Daempferelement als ein auf der Einspanneinrichtung E der Saite festsitzendes, ring- oder zylinderfoermiges elastisches Element auszubilden. Bei einer weiteren Variante kann das Daempferelement als ein auf der Knotenmasse der Saite festsitzendes, ring- oder zylinderfoermiges elastisches Element, beispielsweise als eine die Knotenmasse umschliesssende und einseitig in Saitenlaengsachse ueberragende Schlauchfeder, ausgebildet sein. Dabei kann die Schlauchfeder an ihrem freien Ende eine Verdickung als Massekranz aufweisen.

Gemaess weiteren allgemeinen Varianten kann der Biegestab im wesentlichen gerade ausgebildet und quer zur Saite angeordnet oder im wesentlichen gerade ausgebildet und laengs zur Saite angeordnet sein. Auch kann das Koppelschwingelement im wesentlichen aus einem biegeweichen, schwingfaehigen, wenigstens einarmigen Biegestab 2.2.1; 2.3; 2.4.1; 2.8.2 bestehen und mit wenigstens einer der Knotenmassen 1 und / oder wenigstens einer der Einspanneinrichtungen E der Saite verbunden sein. Dabei kann jedes Ende der Arme des Biegestabes mit einer separaten oder einer allen Armen gemeinsamen Masse verbunden sein.

Es sind aber auch alle anderen, dem Prinzip der gedaempften Koppelschwinger und Schwingungstilger entsprechenden Konfigurationen ausfuehrbar. Dabei muss die Primaer-Eigenfrequenz des schwingungsfaehigen Daempfungselementes kleiner als die kleinste angeregte Eigenfrequenz der Hauptmasse, welche die Knotenmasse bzw. die Einspanneinrichtung E sein kann, sein. Dadurch vermag das schwingende Daempfungselement der Hauptmasse nicht zu folgen. Somit schwingen beide Massen stets gegenphasig in einer stark gedaempften Resonanz [Koppel-Eigenfrequenz], womit sich die Schwingungen fuer die praktischen Beduerfnisse in ausreichendem Mass aufheben.

Als Materialien fuer die schwingenden Daempfungskoerper kommen insbesondere geeignete Gummi- oder Kunststoffsorten, aber auch metallische Materialien in Betracht.

Vorteilhaft bei dieser Daempfereinrichtung ist insbesondere, dass nicht nur ein Daempfungseffekt, sondern auch die Unterdrueckung von Resonanzschwingungen erzielbar ist. Ausserdem ergeben sich wirtschaftliche Vorteile bei der Fertigung und der Montage der Bauteile.

## Patentansprüche

1. Messzelle für ein Kraftmessgerät, insbesondere für eine Waage, mit einem Kraftmesswandler mit einem schwingfähigen System, aus dessen Frequenz eine Messkraft ermittelbar ist, wobei das schwingfähige System wenigstens eine eingespannte Saite mit Knotenmassen umfasst, dadurch gekennzeichnet, dass wenigstens ein Dämpferelement [2] wenigstens einer der Knotenmassen [1] und/oder wenigstens einer der Saiteneinspannstellen [E] direkt zugeordnet ist.

2. Messzelle nach Anspruch 1, dadurch gekennzeichnet, dass das Dämpferelement [2] die Form einer Zusatzmasse aufweist.

3. Messzelle nach Anspruch 2, dadurch gekennzeichnet, dass die Zusatzmasse ein auf der Einspanneinrichtung [E] der Saite festsitzendes, im wesentlichen ring- oder zylinderförmiges elastisches Element ist.

4. Messzelle nach Anspruch 2, dadurch gekennzeichnet, dass die Zusatzmasse ein auf der Einspanneinrichtung [E] der Saite lose aufgeschraubtes, aber gegen losrütteln gesichertes Element [2.10.2; 2.11.2] ist.

5. Messzelle nach Anspruch 2, dadurch gekennzeichnet, dass die Zusatzmasse ein auf der Einspanneinrichtung [E] der Saite aufgeschraubtes elastisches Element ist.

6. Messzelle nach Anspruch 2, dadurch gekennzeichnet, dass die Zusatzmasse ein auf der Knotenmasse der Saite festsitzendes elastisches Element ist.

7. Messzelle nach Anspruch 1, dadurch gekennzeichnet, dass das Dämpferelement [2] ein lose, aber unverlierbar eingesetztes Prallelement [2.1.1, 2.1.2; 2.6.2; 2.7.1; 2.9.1] ist.

8. Messzelle nach Anspruch 7, dadurch gekennzeichnet, dass das Prallelement wenigstens ein in einer oder mehreren geeigneten Nuten einsetzbarer Blechkörper [2.1.1, 2.1.2; 2.9.1] ist.

9. Messzelle nach Anspruch 1, dadurch gekennzeichnet, dass das Dämpferelement [2] die Form eines Koppelschwingelementes aufweist.

10. Messzelle nach Anspruch 9, dadurch gekennzeichnet, dass das Koppelschwingelement im wesentlichen aus einem biegeweichen, schwingfähigen, wenigstens einarmigen Biegestab [2.2.1; 2.3; 2.4.1; 2.8.2] besteht.

11. Messzelle nach Anspruch 10, dadurch gekennzeichnet, dass der Biegestab [2.3; 2.4.1; 2.8.2] im wesentlichen gerade ausgebildet und quer zur Saite angeordnet ist.

12. Messzelle nach Anspruch 10, dadurch gekennzeichnet, dass der Biegestab im wesentlichen gerade ausgebildet und längs zur Saite angeordnet ist.

13. Messzelle nach einem der Ansprüche 10 - 12, dadurch gekennzeichnet, dass auf dem Biegestab [2.2.1; 2.3; 2.4.1; 2.8.2] eine Schwingmasse [2.2.2; 2.4.2; 2.8.3] sitzt.

## Claims

1. A measuring cell for a force measuring device, in particular for a weighing machine, having a force measuring transducer with a vibratable system, from the frequency of which a force to be measured can be ascertained, wherein the vibratable system includes at least one tensioned string with node masses, characterised in that at least one damper element (2) is directly associated with at least one of the node masses (1) and/or at least one of the string clamping locations (E).

2. A measuring cell according to claim 1 characterised in that the damper element (2) is in the form of an additional mass.

3. A measuring cell according to claim 2 characterised in that the additional mass is a substantially annular or cylindrical elastic element which is fixed on the clamping device (E) of the string.

4. A measuring cell according to claim 2 characterised in that the additional mass is an element (2.10.2; 2.11.2) which is loosely screwed on the clamping device (E) of the string but which is secured to prevent it from shaking loose.

5. A measuring cell according to claim 2 characterised in that the additional mass is an elastic element which is screwed on the clamping device (E) of the string.

6. A measuring cell according to claim 2 characterised in that the additional mass is an elastic element which is fixed on the node mass of the string.

7. A measuring cell according to claim 1 characterised in that the damper element (2) is a loose but non-losably inserted impact element (2.1.1, 2.1.2; 2.6.2; 2.7.1; 2.9.1).

8. A measuring cell according to claim 7 characterised in that the impact element is at least one sheet metal body (2.1.1, 2.1.2; 2.9.1) which can be fitted in one or more suitable grooves.

9. A measuring cell according to claim 1 characterised in that the damper element (2) is in the form of a coupling vibrator element.

10. A measuring cell according to claim 9 characterised in that the coupling vibrator element essentially comprises an at least one-armed bending bar (2.2.1; 2.3; 2.4.1; 2.8.2) which is capable of vibration and which is of an easy-bend nature.

11. A measuring cell according to claim 10 characterised in that the bending bar (2.3; 2.4.1; 2.8.2) is substantially straight and is arranged transversely relative to the string.

12. A measuring cell according to claim 10 characterised in that the bending bar is substantially straight and is arranged lengthwise relative to the string.

13. A measuring cell according to one of claims 10 to 12 characterised in that a vibrating mass (2.2.2; 2.4.2; 2.8.3) is carried on the bending bar (2.2.1; 2.3; 2.4.1; 2.8.2).

## Revendications

1. Cellule de mesure pour un appareil de mesure de forces, en particulier pour une balance, comprenant un transducteur de force muni d'un système oscillant, à partir de la fréquence duquel peut être calculée une force de mesure, le système oscillant comprenant au moins une corde serrée munie de masses nodales, caractérisée en ce qu'au moins un élément amortisseur (2) est directement associé à l'une des masses nodales (1) et/ou au moins à l'un des points de serrage (E) de la corde.

2. Cellule de mesure selon la revendication 1, caractérisée en ce que l'élément amortisseur (2) présente la forme d'une masse supplémentaire.

3. Cellule de mesure selon la revendication 2, caractérisée en ce que la masse supplémentaire est un élément sensiblement annulaire ou cylindrique monté de manière inamovible sur le dispositif de serrage (E) de la corde.

4. Cellule de mesure selon la revendication 2, caractérisée en ce que la masse supplémentaire est un élément vissé de manière amovible sur le dispositif de serrage (E) de la corde, mais protégé contre tout détachement dû aux secousses (2.10.2 ; 2.11.2).

5. Cellule de mesure selon la revendication 2, caractérisée en ce que la masse supplémentaire est un élément élastique vissé sur le dispositif de serrage (E) de la corde.

6. Cellule de mesure selon la revendication 2, caractérisée en ce que la masse supplémentaire est un élément élastique monté de manière inamovible sur la masse nodale de la corde.

7. Cellule de mesure selon la revendication 1, caractérisée en ce que l'élément amortisseur (2) est un élément de percussion amovible, mais monté de manière imperdable (2.1.1, 2.1.2 ; 2.6.2 ; 2.7.1 ; 2.9.1).

8. Cellule de mesure selon la revendication 7, caractérisée en ce que l'élément de percussion est au moins un corps en tôle (2.1.1, 2.1.2 ; 2.9.1) pouvant être logé dans une ou plusieurs gorges appropriées.

9. Cellule de mesure selon la revendication 1, caractérisée en ce que l'élément amortisseur (2) présente la forme d'un élément oscillant de couplage.

10. Cellule de mesure selon la revendication 9, caractérisée en ce que l'élément oscillant de couplage est constitué pour l'essentiel d'une barre de flexion (2.2.1 ; 2.3 ; 2.4.1 ; 2.8.2) souple à la flexion, oscillante et possédant au moins un bras.

11. Cellule de mesure selon la revendication 10, caractérisée en ce que la barre de flexion (2.3 ; 2.4.1 ; 2.8.2) est sensiblement rectiligne et disposée transversalement par rapport à la corde.

12. Cellule de mesure selon la revendication 10, caractérisée en ce que la barre de flexion est sensiblement rectiligne et disposée longitudinalement par rapport à la corde.

13. Cellule de mesure selon l'une des revendications 10 à 12, caractérisée en ce qu'une masse oscillante (2.2.2 ; 2.4.2 ; 2.8.3) repose sur la barre de flexion (2.2.1 ; 2.3 ; 2.4.1 ; 2.8.2).
